# EUROPEAN PATENT APPLICATION

(11) **EP 3 716 038 A1**
(43) Date of publication of application: **30.09.2020**
(21) Application number: 19165029.0
(22) Date of filing: 25.03.2019
(51) Int. Cl.: G06F 3/16, G06F 3/01

(54) **AN APPARATUS, METHOD, COMPUTER PROGRAM OR SYSTEM FOR INDICATING AUDIBILITY OF AUDIO CONTENT RENDERED IN A VIRTUAL SPACE**

(71) Applicant: Nokia Technologies Oy, 02610 Espoo (FI)
(72) Inventor: Eronen, Antti Johannes, 33820 Tampere (FI); Leppänen, Jussi Artturi, 33580 Tampere (FI); Lehtiniemi, Arto Juhani, 33880 Lempäälä (FI); Vilermo, Miikka Tapani, 37200 Siuro (FI)
(74) Representative: Swindell & Pearson Limited

(57) **Abstract**

An apparatus, method, computer program and system for indicating audibility of audio content rendered in a virtual space. Certain examples provide determining 401 at least one user 602, 603 to whom audio content 901, from a first user 601, rendered in a virtual space 600, is audible; triggering 402, responsive to said determination, the generation of an indicator 1001 to the first user for indicating that the first user's audio content is audible to at least one user.

## Description

### TECHNOLOGICAL FIELD

Examples of the present disclosure relate to apparatuses, methods, computer programs and systems for indicating audibility of audio content rendered in a virtual space.

### BACKGROUND

The rendering of audio in a virtual space in conventional mediated reality systems (such as, not least for example, an immersive virtual environment of a virtual reality system) is not always optimal. A first user in a virtual space desirous of speaking to a second user in a virtual space may be uncertain as to whether the second user, or indeed any other users, can hear the first user's speech.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

According to various, but not necessarily all, examples of the disclosure there is provided an apparatus comprising means for causing:
determining at least one user to whom a first user's audio content, rendered in a virtual space, is audible;
triggering, responsive to said determination, a generation of an indicator to the first user for indicating that the first user's audio content is audible to at least one user.

According to various, but not necessarily all, examples of the disclosure there is provided a method comprising:
determining at least one user to whom a first user's audio content, rendered in a virtual space, is audible; and
triggering, responsive to said determination, a generation of an indicator to the first user for indicating that the first user's audio content is audible to at least one user.

According to various, but not necessarily all, examples of the disclosure there is provided computer program instructions for causing an apparatus to perform:
determining at least one user to whom a first user's audio content, rendered in a virtual space, is audible; and
triggering, responsive to said determination, a generation of an indicator to the first user for indicating that the first user's audio content is audible to at least one user.

According to various, but not necessarily all, examples of the disclosure there is provided an apparatus comprising:
at least one processor; and
at least one memory including computer program code;
the at least one memory and the computer program code configured to, with the at least one processor, cause the apparatus at least to perform:
   determining at least one user to whom a first user's audio content, rendered in a virtual space, is audible; and
   triggering, responsive to said determination, a generation of an indicator to the first user for indicating that the first user's audio content is audible to at least one user.

According to various, but not necessarily all, examples of the disclosure there is provided a non-transitory computer readable medium encoded with instructions that, when performed by at least one processor, causes at least the following to be performed:
determining at least one user to whom a first user's audio content, rendered in a virtual space, is audible; and
triggering, responsive to said determination, a generation of an indicator to the first user for indicating that the first user's audio content is audible to at least one user.

According to various, but not necessarily all, examples of the disclosure there is provided a chipset comprising processing circuitry configured to perform the above method.

According to various, but not necessarily all, examples of the disclosure there is provided a module, device and/or system comprising means for performing the above method.

The following portion of this 'Brief Summary' section, describes various features that can be features of any of the examples described in the foregoing portion of the 'Brief Summary' section. The description of a function should additionally be considered to also disclose any means suitable for performing that function.

In some but not necessarily all examples, the apparatus comprises means for determining the at least one user to whom the rendered audio content is audible comprises determining at least one virtual user to whom the rendered audio content is audible.

In some but not necessarily all examples, the apparatus comprises means for determining at least one virtual user to whom the rendered audio content is audible is based on one or more of: determining at least one virtual user of the virtual space to whom the audio content is rendered; determining whether the audio content is included in a sound sub-scene of at least one virtual user; one or more volume settings for at least one virtual user; or a virtual position of at least one virtual user of the virtual space.

In some but not necessarily all examples, the apparatus comprises means for determining the at least one user to whom the rendered audio content is audible comprises determining at least one user outside of the virtual space to whom the rendered audio content is audible.

In some but not necessarily all examples, the apparatus comprises means for determining audio communication between the first user and at least one second user in the virtual space, wherein determining at least one user to whom the rendered audio content is audible comprises: determining one or more third users to whom the audio communication between the first user and the at least one second user is audible.

According to various, but not necessarily all, examples of the disclosure there are provided examples as claimed in the appended claims.

### BRIEF DESCRIPTION OF THE DRAWINGS

For a better understanding of various examples of the present disclosure that are useful for understanding the detailed description and certain embodiments of the invention, reference will now be made by way of example only to the accompanying drawings in which:
FIGs. 1A and 1B schematically illustrate an example real space for use with examples of the subject matter described herein;
FIGs. 2A and 2B schematically illustrate an example virtual audio space for use with examples of the subject matter described herein;
FIGs. 3A and 3B schematically illustrate an example virtual visual space for use with examples of the subject matter described herein;
FIG. 4 schematically illustrates an example method of an example of the subject matter described herein;
FIG. 5 schematically illustrates an example apparatus of an example of the subject matter described herein;
FIG. 6 schematically illustrates an example of the subject matter described herein;
FIG. 7 schematically illustrates a further example of the subject matter described herein;
FIG. 8 schematically illustrates a further example of the subject matter described herein;
FIG. 9 schematically illustrates a further example of the subject matter described herein;
FIG. 10 schematically illustrates a further example of the subject matter described herein;
FIG. 11 schematically illustrates a further example of the subject matter described herein;
FIG. 12 schematically illustrates a further example method of an embodiment of the subject matter described herein;
FIG. 13 schematically illustrates a further example of the subject matter described herein; and
FIG. 14 schematically illustrates a further example of the subject matter described herein.

The Figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DEFINITIONS

*"artificial environment"* may be something that has been recorded or generated.

*"virtual visual space"* refers to a fully or partially *artificial environment* that may be viewed, which may be three-dimensional.

*"virtual visual scene"* refers to a representation of the *virtual visual space* viewed from a particular *point-of-view* (e.g. position) within the *virtual visual space.*

*'virtual visual object'* is a visible virtual object within a *virtual visual scene.*

*"virtual sound space"*/*"virtual audio space"* refers to a fully or partially *artificial environment* that may be listened to, which may be three-dimensional.

*"virtual sound scene"*/*"virtual audio scene"* refers to a representation of the *virtual sound space* listened to from a particular *point-of-view* (e.g. position) within the *virtual sound space.*

*'virtual sound object'* is an audible virtual object within a *virtual sound scene.*

*"sound object"* (or "virtual sound *object*") refers to a sound source that may be located within the *sound space* (or "virtual sound space"). A source sound object represents a sound source within the sound space, in contrast to a sound source associated with an object in the virtual visual space. A recorded sound object represents sounds recorded at a particular microphone or location. A rendered sound object represents sounds rendered from a particular location.

*"sound space"* (or "virtual sound space") refers to an arrangement of sound sources in a three-dimensional space. A *sound space* may be defined in relation to recording sounds (a recorded sound space) and in relation to rendering sounds (a rendered sound space).

*"sound scene"* (or "virtual sound scene") refers to a representation of the *sound space* listened to from a particular *point-of-view (position)* within the *sound space.*

*"virtual space"* may mean: a *virtual visual space,* a *virtual sound space* or a combination of a *virtual visual space* and corresponding *virtual sound space.* In some examples, the *virtual space* may extend horizontally up to 360° and may extend vertically up to 180°.

"virtual scene" may mean: a virtual visual scene, a virtual sound scene, or a combination of a virtual visual scene and corresponding virtual sound scene.

*'virtual object'* is an object within a *virtual scene,* it may be an augmented virtual object (e.g. a computer-generated virtual object) or it may be an image of a real object in a *real space* that is live or recorded. It may be a *virtual sound object* and/or a *virtual visual object.*

*"virtual position"* is a position within a virtual space. It may be defined using a *virtual location* and/or a *virtual orientation.* It may be considered to be a movable *'point-of-view'* in *virtual visual space* and/or *virtual sound space.*

*"correspondence"* or *"corresponding"* when used in relation to a *virtual sound space* and a *virtual visual space* means that the *virtual sound space* and *virtual visual space* are time and space aligned, that is they are the same space at the same time.

"correspondence" or "corresponding" when used in relation to a virtual sound scene and a virtual visual scene (or visual scene) means that the virtual sound space and virtual visual space (or visual scene) are corresponding and a notional (virtual) listener whose point-of-view defines the virtual sound scene and a notional (virtual) viewer whose point-of-view defines the virtual visual scene (or visual scene) are at the same location and orientation, that is they have the same point-of-view (same virtual position, i.e. same location and orientation).

*"real space"* (or "physical space") refers to a real environment, outside of the virtual space, which may be three-dimensional.

*"real scene"* refers to a representation of the *real space* from a particular *point-of-view* (position) within the real space.

*"real visual scene"* refers to a visual representation of the real space viewed from a particular real *point-of-view* (position) within the real space.

*"mediated reality",* refers to a user experiencing, for example visually and/or aurally, a fully or partially artificial environment (a *virtual space*) as a *virtual scene* at least partially rendered by an apparatus to a *user.* The *virtual scene* is determined by a *point-of-view* (virtual position) within the *virtual space.* Rendering or *displaying* the *virtual scene* means providing a virtual visual scene and/or a virtual sound scene in a form that can be perceived by the *user.*

*"augmented reality"* refers to a form of *mediated reality* in which a *user* experiences a partially artificial environment (a *virtual space*) as a *virtual scene* comprising a *real scene,* for example a *real visual scene* and *real sound scene,* of a physical real environment (*real space*) supplemented by one or more visual or audio *elements* rendered by an apparatus to a user. The term augmented reality implies a mixed reality or hybrid reality and does not necessarily imply the degree of virtuality (vs reality) or the degree of mediality. Augmented reality (AR) can generally be understood as providing a user with additional information or artificially generated items or content that is at least significantly overlaid upon the user's current real-world environment stimuli. In some such cases, the augmented content may at least partly replace a real-world content for the user. Additional information or content will usually be visual and/or audible. Similarly to VR, but potentially in more applications and use cases, AR may have visual-only or audio-only presentation. For example, user may move about a city and receive audio guidance relating to, e.g., navigation, location-based advertisements, and any other location-based information. Mixed reality (MR) is often considered as a more advanced form of AR where at least some virtual elements are inserted into the physical scene such that they provide the illusion that these elements are part of the real scene and behave accordingly. For audio content, or indeed audio-only use cases, many applications of AR and MR may appear difficult for the user to tell from one another. However, the difference is not only for visual content but it may be relevant also for audio. For example, MR audio rendering may take into account a local room reverberation, e.g., while AR audio rendering may not.

*"virtual reality"* refers to a form of *mediated reality* in which a user experiences a fully artificial environment (a *virtual visual space and*/*or virtual sound space*) as a *virtual scene* rendered by an *apparatus* to a *user.* Virtual reality (VR) can generally be understood as a rendered version of visual and audio scene. The rendering is typically designed to closely mimic the visual and audio sensory stimuli of the real world in order to provide a user a natural experience that is at least significantly consistent with their movement within virtual scene according to the limits defined by the content and/or application. VR in most cases, but not necessarily all cases, requires a user to wear a head mounted display (HMD), to completely replace the user's field of view with a simulated visual presentation, and to wear headphones, to provide the user the simulated audio content similarly completely replacing the sound scene of the physical space. Some form of head tracking and general motion tracking of the user consuming VR content is typically also necessary. This allows the simulated visual and audio presentation to be updated in order to ensure that, from the user's perspective, various scene components such as items and sound sources remain consistent with the user's movements. Additional means to interact with the virtual reality simulation, such as controls or other user interfaces (Ul) may be provided but are not strictly necessary for providing the experience. VR can in some use cases be visual-only or audio-only virtual reality. For example, an audio-only VR experience may relate to a new type of music listening or any other audio experience.

"extended reality (XR)" is a term that refers to all real-and-virtual combined realities/environments and human-machine interactions generated by digital technology and various wearables. It includes representative forms such as augmented reality (AR), augmented virtuality (AV), mixed reality (MR), and virtual reality (VR) and any relevant interpolations.

*"virtual content"* is content, additional to *real content* from a real scene, if any, that enables *mediated reality* by, for example, providing one or more augmented *virtual objects.*

*"mediated reality content"* is virtual content which enables *a user* to experience, for example visually and/or aurally, a fully or partially artificial environment (a *virtual space*) as a *virtual scene. Mediated reality content* could include interactive content such as a video game or non-interactive content such as motion video.

*"augmented reality content"* is a form of mediated reality content which enables a *user* to experience, for example visually and/or aurally, a partially artificial environment (a *virtual space*) as a *virtual scene. Augmented reality content* could include interactive content such as a video game or non-interactive content such as motion video.

*"virtual reality content"* is a form of mediated reality content which enables a user to experience, for example visually and/or aurally, a fully artificial environment (a *virtual space*) as a *virtual scene. Virtual reality content* could include interactive content such as a video game or non-interactive content such as motion video.

*"perspective-mediated"* as applied to *mediated reality, augmented reality or virtual reality* means that *user* actions determine the *point-of-view* (virtual position) within the virtual space, changing the *virtual scene.*

"first person perspective-mediated" as applied to mediated reality, augmented reality or virtual reality means perspective-mediated with the additional constraint that the user's real point-of-view (location and/or orientation) determines the point-of-view (virtual position) within the virtual space of a virtual user.

"third person perspective-mediated" as applied to mediated reality, augmented reality or virtual reality means perspective-mediated with the additional constraint that the user's real point-of-view does not determine the point-of-view (virtual position) within the virtual space.

"user interactive" as applied to mediated reality, augmented reality or virtual reality means that user actions at least partially determine what happens within the virtual space.

*"displaying"* means providing in a form that is perceived visually (viewed) by the *user.*

*"rendering"* means providing in a form that is perceived by the *user, e.g.* visually (viewed) or aurally (listened to) by the user.

*"virtual user"* refers to a user within the virtual space, e.g. a user immersed in a mediated/virtual/augmented reality. *Virtual user* defines the *point-of-view* (virtual position - location and/or orientation) in *virtual space* used to generate a *perspective-mediated sound scene and*/*or visual scene.* A virtual user may be a notional listener and/or a notional viewer.

*"notional listener"* defines the *point-of-view* (virtual position - location and/or orientation) in *virtual space* used to generate a *perspective-mediated sound scene,* irrespective of whether or not a *user* is actually listening.

*"notional viewer"* defines the *point-of-view* (virtual position - location and/or orientation) in *virtual space* used to generate a *perspective-mediated visual scene,* irrespective of whether or not a *user* is actually viewing.

*"three degrees of freedom (3DoF)"* describes *mediated reality* where the *virtual position* is determined by orientation only (e.g. the three degrees of three-dimensional orientation). An example of three degrees of three-dimensional orientation is pitch, roll and yaw (i.e. just 3DoF rotational movement). In relation to *first person perspective-mediated reality 3DoF,* only the *user'*s orientation determines the *virtual position.*

*"six degrees of freedom (6DoF)"* describes mediated reality where the *virtual position* is determined by both orientation (e.g. the three degrees of three-dimensional orientation) and location (e.g. the three degrees of three-dimensional location), i.e. 3DoF rotational and 3DoF translational movement. An example of three degrees of three-dimensional orientation is pitch, roll and yaw. An example of three degrees of three-dimensional location is a three-dimensional coordinate in a Euclidian space spanned by orthogonal axes such as left to right (**x**), front to back (**y**) and down to up (**z**) axes. In relation to *first person perspective-mediated reality 6DoF,* both the *user'*s orientation and the *user'*s location in the *real space* determine the *virtual position.* In relation to third *person perspective-mediated reality 6DoF,* the *user'*s location in the *real space* does not determine the *virtual position.* The *user'*s orientation in the *real space* may or may not determine the *virtual position.*

*"three degrees of freedom 'plus' (3DoF*+*)*" describes an example of six degrees of freedom where a change in location (e.g. the three degrees of three-dimensional location) is a change in location relative to the user that can arise from a postural change of a user's head and/or body and does not involve a translation of the user through real space by, for example, walking.

"spatial rendering" refers to a rendering technique that renders content as an object at a particular three dimensional position within a three dimensional space.

"spatial audio" is the rendering of a sound scene. "First person perspective spatial audio" or "immersive audio" is spatial audio where the user's point-of-view determines the sound scene (or "sub-sound scene"/"sub-audio scene") so that audio content selected by a current point-of-view of the user is rendered to the user. In spatial audio rendering, audio may be rendered as a sound object that has a three-dimensional position in a three-dimensional sound space. Various different spatial audio rendering techniques are available. For example, a head-related transfer function may be used for spatial audio rendering in a binaural format or amplitude panning may be used for spatial audio rendering using loudspeakers. It is possible to control not only the position of an audio object but it is also possible to control the spatial extent of an audio object by distributing the audio object across multiple different spatial channels that divide sound space into distinct sectors, such as sound scenes and sound sub-scenes.

"immersive audio" refers to the rendering of audio content to a user, wherein the audio content is selected in dependence on a current point-of-view of the user. The user therefore has the experience that they are immersed within a three-dimensional audio field/sound scene/audio scene, that may change as their point-of-view changes.

### DETAILED DESCRIPTION

The Figures schematically illustrate an apparatus 500 comprising means 501 for causing:
determining 401 at least one virtual user 602, 603 to whom audio content 901, from a first virtual user 601, rendered in a virtual space 600, is audible;
triggering 402, responsive to said determination, the generation of an indicator 1001 to the first user for indicating that the first user's audio content is audible to at least one user.

For the purposes of illustration and not limitation, various, but not necessarily all, examples may provide the technical advantage that a status is provided as to an audibility of the first user's audio content (e.g. speech/voice) rendered in the virtual space; namely an indication that one or more other users are notional listeners able to hear the first user's audio content (irrespective of whether or not said other users are actually listening). Examples may thereby provide an alert/warning to the first user as to other users/notional listeners of the first user's audio content (and hence enable the user to determine any undesired "eavesdroppers", which may thereby prompt the first user to take appropriate action). Conversely, examples may also enable the first user to determine an absence of other users/notional listeners whom the first user would wish to hear the first user's audio content but who are unable to do so (which may thereby prompt the first user to take appropriate action).

Certain examples of the disclosure determine and indicate to a first user consuming mediated reality content with other users, which of the other users hears the first user's speech when the first user is communicating to at least one of the users within a virtual space. Various, but not necessarily all, examples of the present disclosure can provide a telepresence speech audibility indicator for a first user who is a virtual user in a virtual space (e.g. wherein the first user is telepresent in virtual reality).

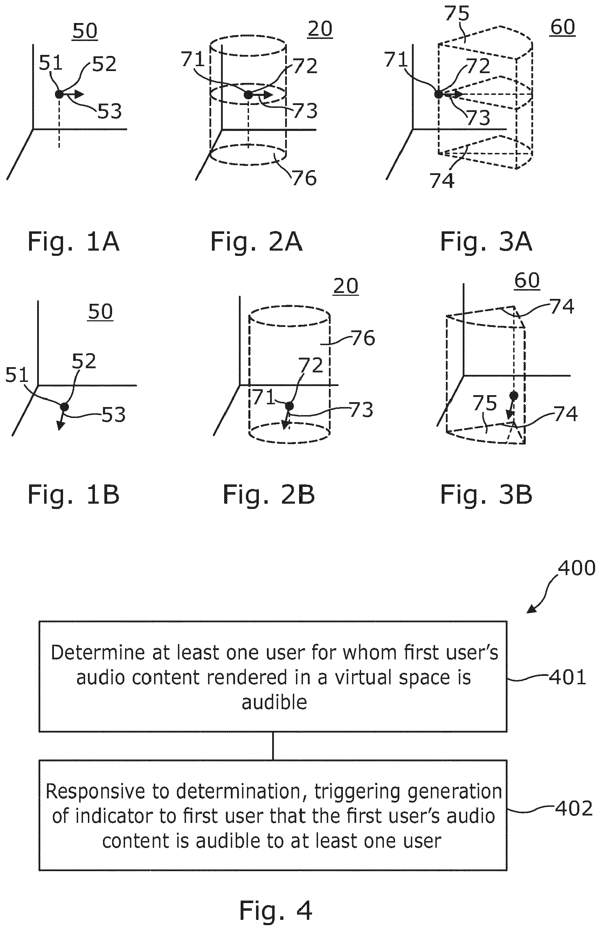

Figs. 1A, 2A and 3A illustrate an example of first person perspective mediated reality. In this context, mediated reality means the rendering of mediated reality for the purposes of achieving mediated reality for a remote user, for example augmented reality or virtual reality. It may or may not be user interactive. The mediated reality may support one or more of: 3DoF, 3DoF+ or 6DoF.

Figs. 1A, 2A and 3A illustrate, at a first time, each of: a real space 50, a virtual sound space 20 and a virtual visual space 60 respectively. There is correspondence between the virtual sound space 20 and the virtual visual space 60. A 'virtual space' may be defined as the virtual sound space 20 and/or the virtual visual space 60. In some examples, the virtual space may comprise just the virtual sound space 20. A user 51 in the real space 50 has a position defined by a (real world) location 52 and a (real world) orientation 53 (i.e. the user's real world point-of-view). The location 52 is a three-dimensional location and the orientation 53 is a three-dimensional orientation.

In an example of 3DoF mediated reality, an orientation 53 of the user 51 controls/determines a virtual orientation 73 of a virtual user 71 within a virtual space, e.g. the virtual visual space 60 and/or the virtual sound space 20. The virtual user 71 represents the user 51 within the virtual space. There is a correspondence between the orientation 53 and the virtual orientation 73 such that a change in the (real world) orientation 53 produces the same change in the virtual orientation 73. In 3DoF mediated reality, a change in the location 52 of the user 51 does not change the virtual location 72 or virtual orientation 73 of the virtual user 71.

The virtual orientation 73 of the virtual user 71, in combination with a virtual field of view 74 defines a virtual visual scene 75 of the virtual user 71 within the virtual visual space 60. The virtual visual scene 75 represents a virtual observable region within the virtual visual space 60 that the virtual user 71 can see. Such a 'virtual visual scene 75 for the virtual user 71' may correspond to a virtual visual 'sub-scene'. The virtual visual scene 75 may determine what visual content (and virtual visual spatial position of the same with respect to the virtual user's position) is rendered to the virtual user. In a similar way that the virtual visual scene 75 of the virtual user 71 may affect what visual content is rendered to the virtual user, a virtual sound scene 76 of the virtual user may affect what audio content (and virtual aural spatial position of the same with respect to the virtual user's position) is rendered to the virtual user.

The virtual orientation 73 of the virtual user 71, in combination with a virtual field of hearing (i.e. an audio equivalent/analogy to a visual field of view) may define a virtual sound scene (or audio scene) 76 of the virtual user 71 within the virtual sound space (or virtual audio space) 20. The virtual sound scene 76 represents a virtual audible region within the virtual sound space 20 that the virtual user 71 can hear. Such a 'virtual sound scene 76 for the virtual user 71' may correspond to a virtual audio 'sub-scene'. The virtual sound scene 76 may determine what audio content (and virtual spatial position/orientation of the same) is rendered to the virtual user.

A virtual visual scene 75 is that part of the virtual visual space 60 that is rendered/visually displayed to a user. A virtual sound scene 76 is that part of the virtual sound space 20 that is rendered/audibly output to a user. The virtual sound space 20 and the virtual visual space 60 correspond in that a position within the virtual sound space 20 has an equivalent position within the virtual visual space 60. In 3D0F mediated reality, a change in the location 52 of the user 51 does not change the virtual location 72 or virtual orientation 73 of the virtual user 71.

In the example of 6DoF mediated reality, the situation is as described for 3DoF and in addition it is possible to change the rendered virtual sound scene 76 and the displayed virtual visual scene 75 by movement of a location 52 of the user 51. For example, there may be a mapping between the location 52 of the user 51 and the virtual location 72 of the virtual user 71. A change in the location 52 of the user 51 produces a corresponding change in the virtual location 72 of the virtual user 71. A change in the virtual location 72 of the virtual user 71 changes the rendered virtual sound scene 76 and also changes the rendered virtual visual scene 75.

This may be appreciated from Figs. 1B, 2B and 3B which illustrate the consequences of a change in position, i.e. a change in location 52 and orientation 53, of the user 51 on respectively the rendered virtual sound scene 76 (Fig. 2B) and the rendered virtual visual scene 75 (Fig. 3B).

Immersive or spatial audio (for 3DoF/3DoF+/6DoF) may consist, e.g., of a channel-based bed and audio objects, first-order or higher-order ambisonics (FOA/HOA) and audio objects, any combination of these such as audio objects only, or any equivalent spatial audio representation.

MPEG-I, which is currently under development, is expected to support new immersive voice and audio services, including methods for various mediated reality, virtual reality (VR), augmented reality (AR) or mixed reality (MR) use cases with each of 3DoF, 3DoF+ and 6DoF use cases

MPEG-I is expected to support dynamic inclusion of audio elements in a virtual sound sub-scene based on their relevance, e.g., audibility relative to the virtual user location, orientation, direction and speed of movement or any other virtual sound scene change movement in virtual space. MPEG-I is expected to support metadata to allow fetching of relevant virtual sub sound scenes, e.g., depending on the virtual user location, orientation or direction and speed of movement in virtual space. A complete virtual sound scene may be divided into a number of virtual sound sub-scenes, defined as a set of audio elements, acoustic elements and acoustic environments. Each virtual sound sub-scene could be created statically or dynamically.

Facilitating communication between users that are in the same virtual world or between a user in a virtual world and one outside the virtual world ("Social VR") is an important aspect of AR/VR services. MPEG-I is expected to support metadata specifying restrictions and recommendations for rendering of speech/audio from the other users (e.g. on placement and sound level).

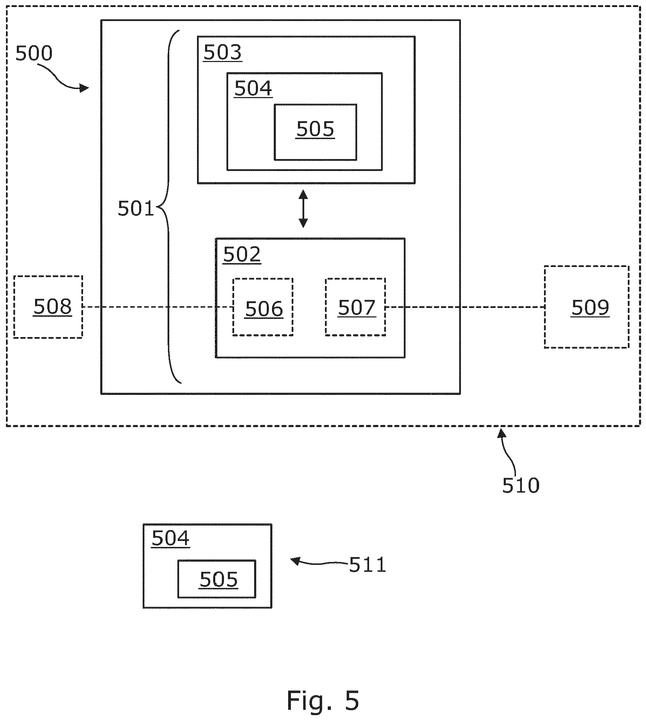

FIG 4 schematically illustrates a flow chart of a method 400 according to an example of the present disclosure. The component blocks of FIG. 4 are functional and the functions described may or may not be performed by a single physical entity (such as is described with reference to FIG. 5).

In block 401, it is determined whether audio content from a first user, when rendered in a virtual space, is audible to at least one user.

In block 402, responsive to the determination, a generation of an indicator to the first user is triggered, the indicator indicating that the first user's audio content is audible to at least one user.

In some examples of the disclosure, a determination is made as to whether the first user's audio content is audible to one or more users. Responsive to the determination, this triggers the generation of an indicator to the first user that the first user's audio content is audible to the one or more users.

In some examples, the audio content may be sound generated by the first user (e.g. speech/the first user's voice) which is captured as audio content/audio data. The captured audio content may be sent/transmitted to and received by an apparatus (such as is described with reference to FIG. 5) which may support/provide the virtual space (e.g. a server and/or user device providing a mediated reality environment/service that renders audio and visual content to a virtual user). The apparatus may then render (or cause to be rendered) the first user's audio content to one or more virtual users within the virtual space. The rendering of the audio content in the virtual space to virtual users may comprise one or more of:
spatially rendering the audio content in the virtual space;
rendering the audio content as a virtual sound object at a particular virtual position within the virtual space (e.g. corresponding to a virtual position of the first user within the virtual space, i.e. the first virtual user's position);
rendering the audio content to provide a virtual sound scene in the virtual space; and
rendering the audio content to virtual users within a limited virtual region (i.e. within a limited virtual region in the virtual sound space) such that any virtual user virtually present in the limited virtual region, or whose own virtual sub-sound scene overlapped with the virtual limited region, would have the audio content rendered. The shape and/or dimensions of the limited virtual region may be dependent upon one or more of:
   a directionality of the audio content (wherein the audio content is spatial audio content having directionality, for example direction in which the first user is speaking);
   an initial volume level (capture volume level) of the audio content, for example a loudness at which the first user is speaking; and/or
   one or more virtual objects in the virtual space (e.g. virtual walls or other virtual objects in the virtual scene with virtual sound absorbing properties that, in effect, aurally occlude/eclipse/block the audio content in the virtual space).

In some examples, one or more sound sub-scenes for one or more virtual users may be generated, wherein the one or more sound sub-scenes comprise the audio content.

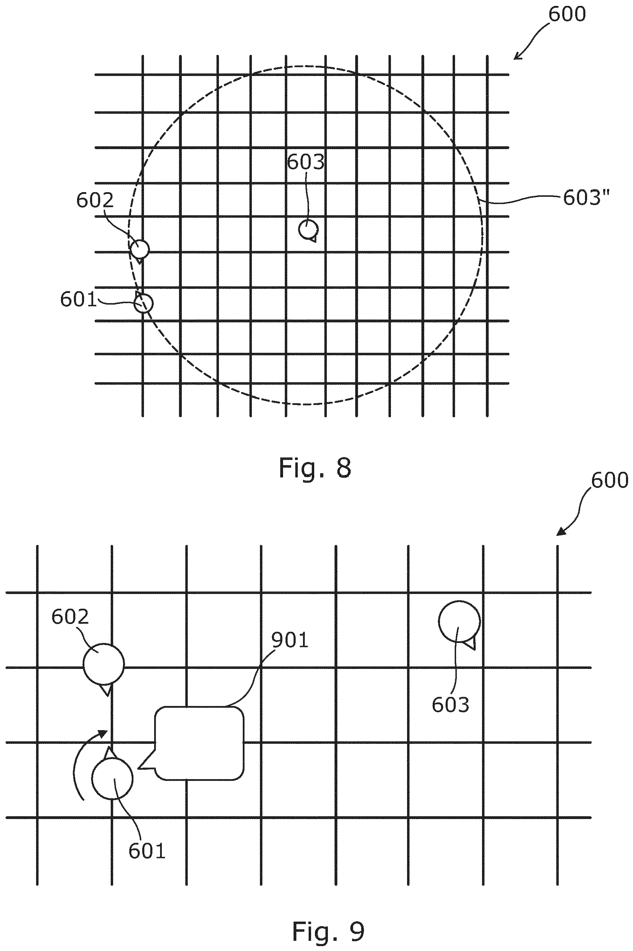

In some examples, determining the at least one user to whom the rendered audio content is audible may comprise determining at least one virtual user to whom the rendered audio content is audible (as discussed with respect to FIGs. 8 - 11). This may be based on one or more of:
determining at least one virtual user of the virtual space to whom the audio content is rendered;
determining whether the audio content is included in a sound sub-scene of at least one virtual user;
one or more volume settings/levels/gain of at least one virtual user; and
a virtual position (i.e. location and/or orientation) of at least one virtual user of the virtual space.

In some examples, determining whether the audio content is included in a sound sub-scene of the at least one user may be dependent on one or more of:
determining a virtual separation distance between the first virtual user and the at least one virtual user (e.g. being within a predetermined threshold or dynamic threshold virtual distance, which may be dynamic based on one or more of: volume level/gain/amplitude of initially captured audio content or a volume level/gain/amplitude of the rendered audio content on an audio output device of the virtual users);
determining a difference in virtual orientation between a virtual direction of rendered audio content/first virtual user and a virtual direction of the at least one user;
determining whether a virtual object in the virtual space (e.g. a virtual wall having virtual sound absorbing properties) between the first user and the at least one user that virtually aurally occludes the audio content from the at least one user; and/or
determining a volume level of the audio content rendered at a virtual position corresponding to the virtual position of the at least one user in the virtual space being below a threshold volume level, wherein the volume level of the rendered audio content is attenuated in dependence on a virtual distance between the virtual position of the virtual audio source of the audio content (e.g. the virtual position of the first user, i.e. the first virtual user's position) and the position of the at least one user in the virtual space.

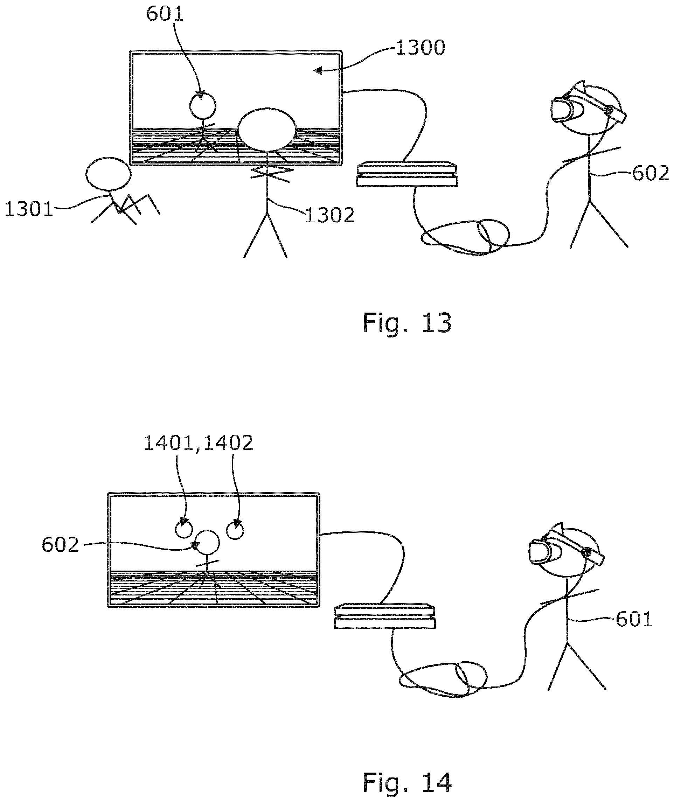

In some examples, determining the at least one user to whom the rendered audio content is audible may comprise determining at least one user outside of the virtual space to whom the rendered audio content is audible (as discussed with respect to FIGs. 13 and 14).

In some examples, determining at least one user outside of the virtual space to whom the rendered audio content is audible may be based on one or more of:
detecting at least one user, outside of the virtual space, proximal to a user within the virtual space to whom the first user's audio content is rendered; and/or
detecting at least one user, outside of the virtual space, proximal to a user within the virtual space to whom the first user's audio content is output. For example, if the rendered audio content is output in the real world via a loud speaker of a TV (see FIG. 13), determining one or more users outside of the virtual space to whom the audio content output is audible.

In some examples, a determination is made as to whether there is audio communication between the first user and at least one second user in the virtual space (e.g. it is determined whether the first user wishes to talk to or is currently talking to one or more second user(s)). Such a determination may be based on one or more of:
the first user's gaze, e.g. a determination of the first user's gaze being in a direction of the second user;
a determination of speech in audio content captured from the first user;
receipt of a user input from the first user indicative/representative of the first user initiating communication with the at least one second user; and/or
determination of an active communication channel between the first user and at least one second user.

In some examples, determining communication with the second user comprises:
determining transmission/receipt, for rendering to the second user, of audio content from the first user, and causing rendering, to the second user, of the audio content from the first; and/or
determining active communication channel between first and second user.

In some examples, the step of determining one or more users to whom the rendered audio content is audible is responsive to determining communication (e.g. speech and/or vocal content which may be in real time / low latency) within the virtual space between the first user and one or more second users, wherein the first and one or more second users are first and one or more second virtual users in the virtual space.

In some examples, the step determining at least one user to whom the rendered audio content is audible comprises determining one or more third users (different to the first user and at least one second user) to whom the audio communication between the first user and the at least one second user is audible. In other words, the "at least one user" may be at least one third user (different to the first user and the at least one second user) and a determination may be made as to such other users/third users, i.e. other than the second user(s), who can hear the first user's speech.

In some examples, the indicator is displayed to the first user, e.g. on a visual output/rendering device of the first user (not least such as a head mounted display). The generation of the indicator may comprise the generation of a visualization to the first user that indicates that the first user's audio content is audible to at least user. In some examples, a single indicator represents the audibility of the first user's audio content to one or more users. In some examples, a separate indicator is rendered for each of the users to whom the first user's audio content is audible.

The one or more indicators may be one or more user manipulable visual elements, such as one or more graphical user interface objects that are manipulable by the first virtual user in the virtual space, wherein manipulation of the same is used to effect a function/control/directive in the virtual space. For example, the rendering of the audio content to one or more of the users may be controlled responsive to user manipulation of the one or more visual elements.

In some examples, responsive to receipt of a determination of user manipulation of the indicator (i.e. determination of virtual manipulation of the displayed indicator in virtual space), at least one or more of the following may be performed:
control the audibility of the audio content to the at least one user;
control the rendering of the audio content to the at least one user; and/or
generate a message to the at least one user.

Various, but not necessarily all, examples of the present disclosure can take the form of a method, an apparatus or a computer program. Accordingly, various, but not necessarily all, examples can be implemented in hardware, software or a combination of hardware and software. The above described method operations may be performed by an apparatus (for example such as illustrated in FIG. 5). By way of example, the apparatus includes one or more components for effecting the above described functionality. It is contemplated that the functions of these components can be combined in one or more components or performed by other components of equivalent functionality.

FIG. 5 schematically illustrates a block diagram of an apparatus 500. The apparatus 500 comprises a controller 501. Implementation of the controller 501 can be as controller circuitry. Implementation of the controller 501 can be in hardware alone (for example processing circuitry comprising one or more processors and memory circuitry comprising one or more memory elements), have certain aspects in software including firmware alone or can be a combination of hardware and software (including firmware).

The controller 501 can be implemented using instructions that enable hardware functionality, for example, by using executable computer program instructions in a general-purpose or special-purpose processor that can be stored on a computer readable storage medium (disk, memory etc.) or carried by a signal carrier to be performed by such a processor.

In the illustrated example, the apparatus 500 comprises a controller 501 which is provided by a processor 502 and memory 503. Although a single processor 502 and a single memory are illustrated in other implementations there can be multiple processors and/or there can be multiple memories some or all of which can be integrated/removable and/or can provide permanent/semi-permanent/ dynamic/cached storage.

The memory 503 stores a computer program 504 comprising computer program code/ instructions 505 that control the operation of the apparatus 500 when loaded into the processor 502. The computer program code 505 provides the logic and routines that enable the apparatus 500 to perform the methods presently described.

The processor 502 is configured to read from and write to the memory 503. The processor 502 can also comprise an input interface 506 via which data and/or commands are input to the processor 502, and an output interface 507 via which data and/or commands are output by the processor 502.

The apparatus 500 therefore comprises:
at least one processor 502; and
at least one memory 503 including computer program code 505 the at least one memory 503 and the computer program code 505 configured to, with the at least one processor 502, cause the apparatus 500 at least to perform:
   determining at least one user to whom audio content, from a first user, rendered in a virtual space is audible;
   triggering, responsive to said determination, the generation of an indicator to the first user for indicating that the first user's audio content is audible to at least one user.

The computer program 504 can arrive at the apparatus 500 via any suitable delivery mechanism 511. The delivery mechanism 511 can be, for example, a non-transitory computer-readable storage medium, a computer program product, a memory device, a record medium such as a compact disc read-only memory, or digital versatile disc, or an article of manufacture that tangibly embodies the computer program 504. The delivery mechanism can be a signal configured to reliably transfer the computer program 504. The apparatus 500 can receive, propagate or transmit the computer program 504 as a computer data signal. The apparatus 500 may comprise a transmitting device and a receiving device for communicating with remote devices via a communications channel (not shown).

As will be appreciated, any such computer program code 505 can be loaded onto a computer or other programmable apparatus (i.e., hardware) to produce a machine, such that the code/instructions when performed on the programmable apparatus create means for implementing the functions specified in the blocks. The computer program code 505 can also be stored in a computer-readable medium that can direct a programmable apparatus to function in a particular manner, such that the instructions stored in the computer-readable memory produce an article of manufacture including instruction means which implement the function specified in the blocks. The computer program code 505 can also be loaded onto a programmable apparatus to cause a series of operational actions to be performed on the programmable apparatus to produce a computer-implemented process such that the instructions which are performed on the programmable apparatus provide actions for implementing the functions specified in the blocks.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' refers to all of the following:
(a) hardware-only circuit implementations (such as implementations in only analog and/or digital circuitry) and
(b) to combinations of circuits and software (and/or firmware), such as (as applicable): (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In the present description, the apparatus 500 described can alternatively or in addition comprise an apparatus which in some other embodiments comprises a distributed system of apparatuses, for example, a client/server apparatus system. In examples of embodiments where the apparatus 500 forms (or the method 400 is implemented as) a distributed system, each apparatus forming a component and/or part of the system provides (or implements) one or more features which collectively implement an example of the present disclosure. In some examples of embodiments, the apparatus 500 is re-configured by an entity other than its initial manufacturer to implement an example of the present disclosure by being provided with additional software, for example by a user downloading such software, which when executed causes the apparatus 500 to implement an example of the present disclosure (such implementation being either entirely by the apparatus 500 or as part of a system of apparatuses as mentioned hereinabove).

The apparatus 500, or system in which it may be embodied, can be not least for example one or more of: a client device, a server device, a user equipment device, a wireless communications device, a hand-portable electronic device, a head mountable device etc. The apparatus 500 can be embodied by a computing device, not least such as those mentioned above. However, in some examples, the apparatus 500 can be embodied as a chip, chip set or module, i.e. for use in any of the foregoing.

In one example, the apparatus 500 is embodied on a hand held portable electronic device, such as a mobile telephone, wearable computing device or personal digital assistant, that can additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions.

The apparatus 500 can be provided in an electronic device, for example, mobile terminal, according to an exemplary embodiment of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus 500 can be provided in a mobile terminal, other types of electronic devices, such as, but not limited to, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The apparatus 500 can be provided in a module. As used here 'module' refers to a unit or apparatus 500 that excludes certain parts/components that would be added by an end manufacturer or a user.

The above described examples may find application as enabling components of: telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; automotive systems; user interfaces also known as human machine interfaces; networks including cellular, non-cellular, and optical networks; ad-hoc networks; the internet; the internet of things; virtualized networks; and related software and services.

Although examples of the apparatus 500 have been described above in terms of comprising various components, it should be understood that the components can be embodied as or otherwise controlled by a corresponding controller 501 or circuitry such as one or more processing elements or processors 502 of the apparatus 500. In this regard, each of the components described above can be one or more of any device, means or circuitry embodied in hardware, software or a combination of hardware and software that is configured to perform the corresponding functions of the respective components as described above.

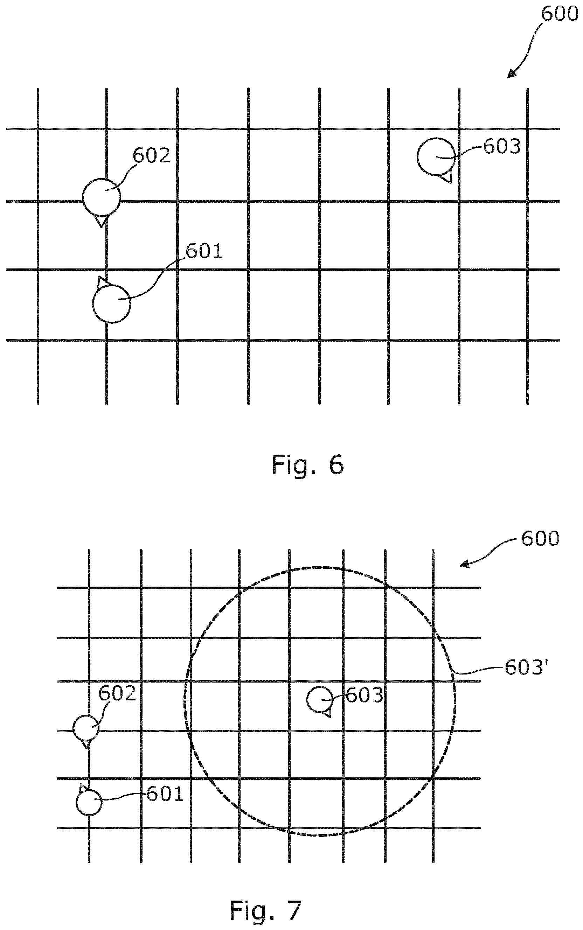

FIG. 6 schematically illustrates a plan view of a virtual space 600, e.g. Virtual reality (VR), within which there are: a first virtual user 601, a second virtual user 602 and a third virtual user 603. An apparatus/system (not shown), e.g. on a server, serves the virtual content to the users.

Previously, when a user communicates with other users in VR, it is not always clear to the user who will hear his speech. The user may wonder whether another user is too far in the virtual/sound scene to hear him or not. Furthermore, the VR system may not always render all of the audio content in the virtual scene to all of the users (each user may have their own sub-sound scene). A user may be rendered only a sub-set (based on his position, direction of movement, etc.) of the audio content in the virtual scene. Thus, even though another user is close-by in the virtual scene, he may not hear the user's speech due to it not being in the other user's current sub-scene.

In the example scenario of Fig 6, the first virtual user 601 is talking to the second virtual user 602 in VR. However, he is not sure whether or not the third virtual user 603 will hear his speech as the third virtual user 603 might, or might not, be too far away in the virtual space 600 to hear the conversation. Furthermore, the first virtual user 601 does not know the volume settings of the third virtual user 603 which may make the speech of the first virtual user 601 more audible (or less audible) to the third virtual user 603.

With regards to FIG. 7, even though the third virtual user 603, may be virtually close-by the first virtual user 601 (i.e. close in virtual space), the third virtual user 603 may not hear the speech of the first virtual user 601 due to it not being in the virtual sound sub-scene 603' of the third virtual user 603.

With regards to FIG. 8, the opposite might happen as well. The third virtual user 603 may be far away from the first virtual user 601, but is still able to hear the speech of the first virtual user 601 due to it being in the virtual sound sub-scene 603" of the third virtual user 603 (being larger than that of the virtual sound sub-scene 603' of FIG. 7). The virtual size, dimensions and shape of the virtual sound sub-scene 603' of the third virtual user 603 may be dynamically variable. In some scenarios customized distance/gain attenuation settings might be applied (for example, in the case the virtual experience has been scaled to a smaller physical space). A user, e.g. the third virtual user 603, may deem the speech of the first virtual user 601 to be important and thus may have had the audio content of the first virtual user 601 added to the third virtual user's own virtual sound sub-scene. The third virtual user 603, may have adjusted his audio pick-up volume settings (e.g. in the virtual domain) and audio output volume settings (in the virtual and real domains) so as to hear the speech of the first virtual user 601.

In the scenario of FIG. 9, based on a detection of a gaze direction of the first virtual user 601 (namely towards the second virtual user 602) and/or a detection of the presence of speech in the audio content of the first virtual user 601, the system determines that the first virtual user 601 begins to communicate (talk) to the second virtual user 602. Another way of initiating communication between users and determining the same could be, for example, the first virtual user 601 performing a gesture towards the second virtual user 602 to indicate that the first virtual user 601 wishes to open a communication channel with the second virtual user 602 and to effect the same.

Once the system has determined that the first virtual user 601 is talking to the second virtual user 602, the system determines which of the other users (in this case the third virtual user 603) are able to hear the audio content 901 (e.g. speech) of the first virtual user 601. This includes:
determining whether the audio content 901 of the first virtual user 601 is included in the sub-scene of the third virtual user 603; and/or
determining a volume level of the audio content/speech 901 of the first virtual user 601 at the virtual position of the third virtual user 603 in the virtual space, wherein the volume is attenuated with increasing distance between the users, such that the further away the third virtual user 603 is from the first virtual user 601, the more distance gain attenuation is applied to the audio content/speech 901, making it less audible to the third virtual user 603.

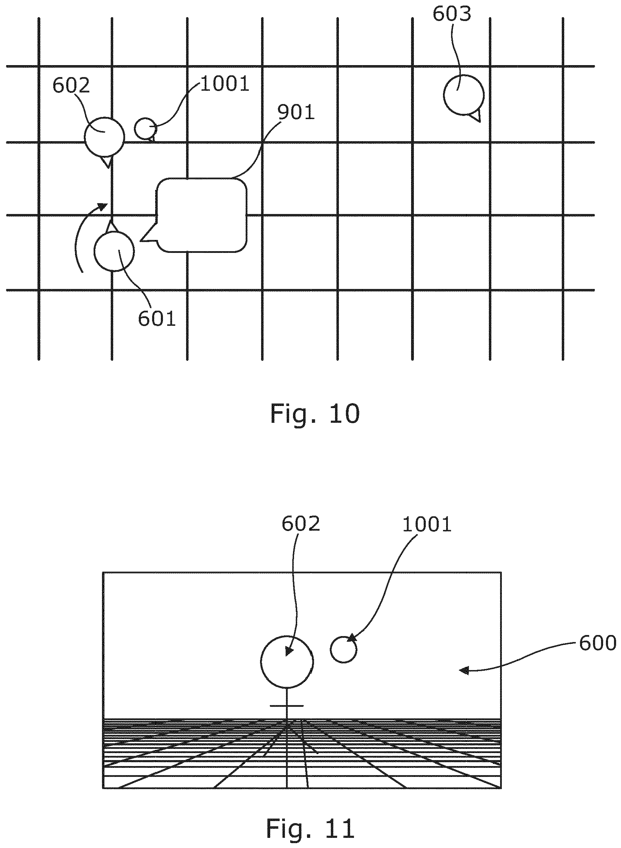

FIG 10 illustrates how the audibility of the first virtual user's 601 audio content/speech 901 by the third virtual user 603 is indicated to the first virtual user 601. In the example in FIG. 10 the third virtual user 603 is able to hear the first virtual user's audio content/speech when the first virtual 601 user talks to the second virtual user 602. This causes an indicator 1001 to be rendered to the first virtual user 601 (in this example, it appears next to the avatar of the second virtual user 602) that indicates that the third virtual user 603 can hear the audio content/speech of the first virtual user 601. In some examples, the system measures a volume of the audio content/speech of the first virtual user 601 and the audio content/speech of the first virtual user 601 is audible to the third virtual user if the volume is sufficiently high, i.e. greater than a predetermined threshold.

FIG 11, illustrates the virtual space 600 from the first person perspective viewpoint of the first virtual user 601, with the displayed indicator 1001 appearing next to the avatar of the second virtual user 602 indicating that the third virtual user 603 can hear the speech of the first virtual user 601. In this example, the indicator 1001 is an avatar of the third virtual user 603. However, it is to be appreciated that any form of indication may be provided.

Once one or more indicators 1001 appear to the first virtual user 601 (that indicate to the first virtual user 601 which one or more other users are able to hear his speech) the first virtual user 601 may interact with the indicator(s) 1001 to control the rendering of his speech to the other users, e.g. to make his speech inaudible for some of the users. The first virtual user 601 can provide a user input to indicate to whom it is permitted to direct the communication/render it to in the virtual space, or to whom it is not permitted to direct the communication to/render it to. In response, the system may attempt to route the communication audio so that it is passed only to those persons to whom it is intended for. For example, the first virtual user 601 may perform a swipe gesture to swipe away the indicators of the users he wishes not to hear his speech. This will cause the first virtual user's speech to be muted for the users' whose avatars were swiped away.

In the above example, there is a single second virtual user 602 to whom the first virtual user 601 speaks to in the virtual environment 600. However, it is to be appreciated that the first virtual user 601 could be in conversation with plural users, i.e. plural second virtual users 602 (some in the virtual space 600, some in real space). Likewise, there could be plural other users, i.e. plural third virtual users 603 able to hear the speech of the first virtual user 601 (some in the virtual space 600, some in real space). Accordingly, there could be a separate (user manipulable) indicator for each of the plural third virtual users 603.

Examples of the present disclosure may provide an apparatus, method, computer program and system for determining and indicating to a user consuming VR content with other users, which of the other user hears his speech when communicating to at least one of the users. In the above example with respect to FIG's 9-11, the one or more third virtual user's 603, i.e. one or more third user's, are virtual users of the virtual space. In some examples, a determination is made as to whether the first virtual user's audio content is audible to users outside of the virtual space.

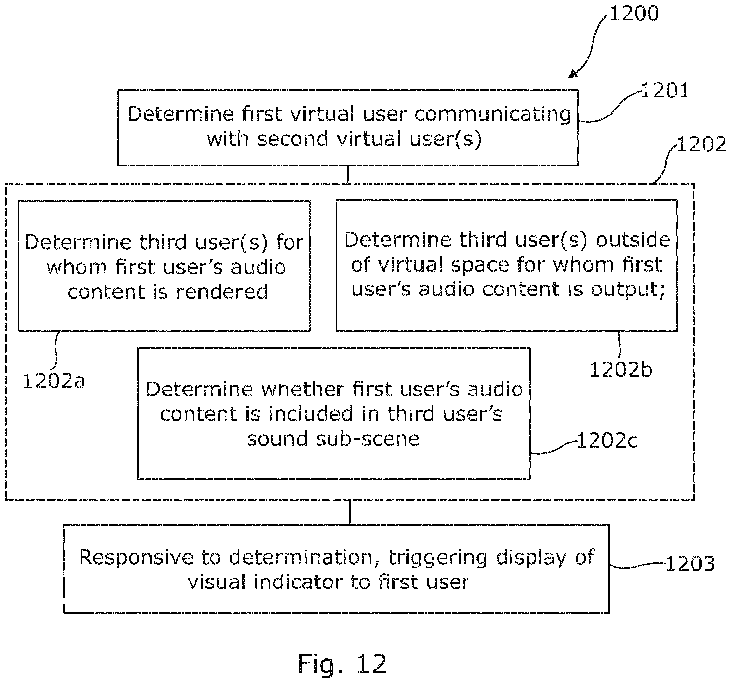

FIG 12 schematically illustrates a flow chart of a method 1200 according to an example of the present disclosure. The component blocks of FIG. 12 are functional and the functions described may or may not be performed by a single physical entity (such as is described with reference to FIG. 5).

In block 1201, a determination is made as to whether there is audio communication between a first virtual user and at least one second virtual user in a virtual space. This may comprise determining the initiation of communication of an active communication between the first and at least second virtual users.

In block 1202, it is determined whether there is at least one user to whom the first user's audio content, rendered in the virtual space, is audible. This may comprise:
determining one or more third virtual users to whom the audio communication between the first virtual user and the at least one second virtual user is audible (block 1202a);
determining one or more third users outside of the virtual space to whom the audio communication between the first virtual user and the at least one second virtual user is output (block 1202b); and/or determining whether the first virtual user's audio communication/audio content is included in one or more sound sub-scenes of one or more third virtual users (block 1202c).

In block 1203, responsive to determining there is at least one user (e.g. a virtual user of the virtual space and/or a user not in the virtual space) whom the first virtual user's audio content is audible, a visual indicator is displayed/rendered to the first virtual user.

The illustration of a particular order to the blocks does not necessarily imply that there is a required or preferred order for the blocks and the order and arrangement of the block can be varied. Furthermore, it can be possible for some blocks to be omitted.

FIG's 13 and 14 illustrate an example of the determination and indication to a first virtual user 601 (who is immersed in a VR content with other users in the VR environment) which other user(s) not in the VR environment can hear the first virtual user's speech when communicating to at least one of the users in the VR environment.

FIG 13 illustrates one of the users of the VR environment (in this example the second virtual user 602) consuming VR content via a head mounted display device that renders visual and audio content to the second virtual user 602. There are also additionally spectators, namely a fourth user 1301 and a fifth user 1302, viewing the second virtual user's VR content 1300. For example, a TV or other display may be showing the second virtual user's VR view and rendering his audio) while the second virtual user 602 is consuming VR using his HMD, computer or game console. Examples of the invention may enable a remote user of the virtual environment, the first virtual user 601, to become aware of these spectating users 1301, 1302.

In some examples, it is determined if additional "spectating users" (i.e. "third users" not in the virtual space, in this case the fourth user 1301 and the fifth user 1302) are present near a user, e.g. the second virtual user 602, who is in the virtual space, that are able to hear the first virtual user's 601 speech. The fourth and fifth users 1301, 1302 are able to hear the first virtual user's speech through the TV connected to the second virtual user's device used to consume the VR content, e.g. a head mounted display/game console. The presence of these additional spectating (real world) users 1301, 1302 not in the virtual space may be determined, not least for example by using well known video-based person detection and segmentation algorithms using data from a camera attached to the system the second virtual user is using to consume the VR content.

FIG 14 shows indicators 1401 1402 rendered to the first virtual user 601. The indicators 1401, 1402 may be avatars for the fourth 1301 and fifth 1302 users, which are rendered next to the avatar of the second virtual user 602. The avatar indicators 1401, 1402 may be a cropped video feed captured by the camera or they may be avatars linked to the spectating users 1301, 1302 (whose faces may be recognized from the video and associated with user accounts).

In some scenarios, it may not possible (or it may be difficult) to make the first virtual user's speech non-audible for one user yet audible for another. For example, in the case of FIG's 13 and 14, it may not be possible to mute the speech of the first virtual user 601 for the fourth user 1301 but not mute it for the fifth user 1302 - since the fourth user 1301 and the fifth user 1302 are using the same rendering/output device to watch and hear the audio/visual content of the virtual space. In this case, following receipt of a request to mute audio content to the fourth user 1301, e.g. by the first virtual user swiping away the fourth user's avatar, this may control the distribution of the first virtual user's audio content to prevent it from being output to the fourth user, i.e. prevent the output of the first virtual user's audio content from being output by the TV set) this would preclude the fifth user from hearing the audio content, hence the swiping of the fourth user's avatar may also cause the removal of the display of the fifth user's avatar.

Responsive to user manipulation of the indicator, the first virtual user can control the rendering of his audio content, i.e. to whom it is rendered. The first virtual user can indicate to whom it is acceptable to direct the communication or to whom it is not permitted to direct the communication. In response, the system tries to route the communication audio so that it is passed only to those persons to whom it is intended to. For example, if two persons experiencing VR via a TV and communication is to be directed only to one of them, the system may generate a message, such as a request to the person permitted to hear the audio content, to walk close to the TV speaker so that the first virtual user can whispered his speech and/or so that the output volume level of the rendered audio content from the speaker is sufficiently low so that the other person does not hear it.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

Where a structural feature has been described, it can be replaced by means for performing one or more of the functions of the structural feature whether that function or those functions are explicitly or implicitly described.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

In this description, the wording 'communication' and its derivatives mean operationally in communication. It should be appreciated that any number or combination of intervening components can exist (including no intervening components), i.e. so as to provide direct or indirect communication. Any such intervening components can include hardware and/or software components.

As used herein, the "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory) and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or 'the' with an exclusive meaning then it will be made clear in the context. In some circumstances the use of 'at least one' or 'one or more' can be used to emphasis an inclusive meaning but the absence of these terms should not be taken to infer and exclusive meaning.

The presence of a feature (or combination of features) in a claim is a reference to that feature) or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art.

Each and every claim is incorporated as further disclosure into the specification and the claims are embodiment(s) of the present invention. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. An apparatus comprising means for causing:
determining at least one user to whom a first user's audio content, rendered in a virtual space, is audible;
triggering, responsive to said determination, a generation of an indicator to the first user for indicating that the first user's audio content is audible to at least one user.

2. The apparatus of claim 1, wherein determining the at least one user to whom the rendered audio content is audible comprises determining at least one virtual user to whom the rendered audio content is audible.

3. The apparatus of claim 2, wherein determining at least one virtual user to whom the rendered audio content is audible is based on one or more of:
determining at least one virtual user of the virtual space to whom the audio content is rendered;
determining whether the audio content is included in a sound sub-scene of at least one virtual user;
one or more volume settings for at least one virtual user; or
a virtual position of at least one virtual user of the virtual space.

4. The apparatus of any one of the previous claims, wherein determining the at least one user to whom the rendered audio content is audible comprises determining at least one user outside of the virtual space to whom the rendered audio content is audible.

5. The apparatus of claim 4, wherein determining at least one user outside of the virtual space to whom the rendered audio content is audible is based on one or more of:
detecting at least one user, outside of the virtual space, proximal to a user within the virtual space, wherein the first user's audio content is rendered to said user within the virtual space; or
detecting at least one user, outside of the virtual space, to whom the first user's audio content is output.

6. The apparatus of claim 1, further comprising means for:
determining audio communication between the first user and at least one second user in the virtual space,
wherein determining at least one user to whom the rendered audio content is audible comprises:
determining one or more third users to whom the audio communication between the first user and the at least one second user is audible.

7. The apparatus of any one of the previous claims, further comprising means for causing the display of the indicator to the first user.

8. The apparatus of any one of the previous claims wherein the indicator is a user manipulable visual element.

9. The apparatus of claim 8, wherein the rendering of the audio content to the at least one user is controlled responsive to user manipulation of the visual element.

10. The apparatus of any one of the previous claims, further comprising means for, responsive to receipt of user manipulation of the indicator, at least one or more of:
controlling the rendering of the audio content to the at least one user;
generating a message to the at least one user.

11. The apparatus of any one of the previous claims, wherein the apparatus is at least part of a chipset.

12. The apparatus of any one of the previous claims, wherein the apparatus is at least part of: a portable device, a handheld device, a wearable device, a wireless communications device, a user equipment device or a server.

13. A method comprising causing, at least in part, actions that result in:
determining at least one user to whom a first user's audio content, rendered in a virtual space, is audible; and
triggering, responsive to said determination, a generation of an indicator to the first user for indicating that the first user's audio content is audible to at least one user.

14. Computer program instructions for causing an apparatus to perform:
determining at least one user to whom a first user's audio content, rendered in a virtual space, is audible; and
triggering, responsive to said determination, a generation of an indicator to the first user for indicating that the first user's audio content is audible to at least one user.
